# EUROPÄISCHE PATENTANMELDUNG

(11) **EP 0 858 234 A2**
(43) Veröffentlichungstag der Anmeldung: **12.08.1998**
(21) Anmeldenummer: 98101911.0
(22) Anmeldetag: 04.02.1998
(51) Int. Cl.: H04Q 7/24

(54) **Schaltungsanordnung für Fernmeldewählnetze, vorzugsweise Fernsprechwählnetze und Verfahren zur Herstellung von Fernmeldeverbindungen in Fernmeldewählnetzen**

(30) Priorität: 05.02.1997 DE 29701999 U; 10.02.1997 DE 19705032
(71) Anmelder: PEITZ GmbH, 80686 München (DE)
(72) Erfinder: Peitz, Albert, 80686 München (DE); Weiher, Hans Jochem, 80639 München (DE)
(74) Vertreter: Dosterschill, Peter, Dr.

(57) **Zusammenfassung**

Die Erfindung betrifft eine Schaltungsanordnung für Fernmeldewählnetze, wobei mobile und stationäre Teilnehmerendgeräte in funktionell gleicher Weise Zugang zu einer ersten Vermittlungsstelle haben. Die erste Vermittlungsstelle und eine Übertragungseinrichtung sind in der Weise ausgestaltet, daß netzweit für die stationären und mobilen Teilnehmerendgeräte gleiche Signalisierungs- und Kommunikationskanalzuordnungsprozeduren realisiert werden. Die Nutzinformationsübertragung erfolgt netzweit im gleichen Format.

Die Übertragungseinrichtung weist mindestens eine Umwandlungsschaltung auf, die Nutzinformationen stationärer Teilnehmerendgeräte, welche im Rahmen einer Fernmeldeverbindung in einem ausgewählten Kommunikationskanalpaar übertragen werden, mobilfunkstandardkompatibel umwandelt.

## Beschreibung

Die Erfindung bezieht sich auf eine Schaltungsanordnung für Fernmeldewählnetze, vorzugsweise Fernsprechwählnetze, nach dem Oberbegriff des Anspruchs 1 sowie auf ein Verfahren zur Herstellung von Fernmeldeverbindungen in Fernmeldewählnetzen nach dem Oberbegriff des Anspruchs 13.

Eine derartige Schaltungsanordnung ist bereits aus der DE-PS 4008790 C2 bekannt. Bei der bekannten Schaltungsanordnung sind mobile und stationäre ("fixed") Teilnehmerendgeräte in funktionell gleicher Weise an ein und dieselbe Teilnehmerzugangsvermittlungsstelle angeschlossen. Alle Teilnehmerendgeräte haben personenbezogene Netzzugänge, wobei die sonst in stationären Netzen üblichen individuellen Teilnehmerleitungen entfallen. In der bekannten Schaltungsanordnung sind die stationären Teilnehmerendgeräte über ein Breitbandkabel mit der Teilnehmerzugangsvermittlungsstelle verbunden.

In der bekannten Schaltungsanordnung sind für die mobilen und stationären Teilnehmerendgeräte gleiche Signalisierungs- und Kommunikationskanalzuordnungsprozeduren realisiert; die Nutzinformationsübertragung erfolgt netzweit im selben Format.

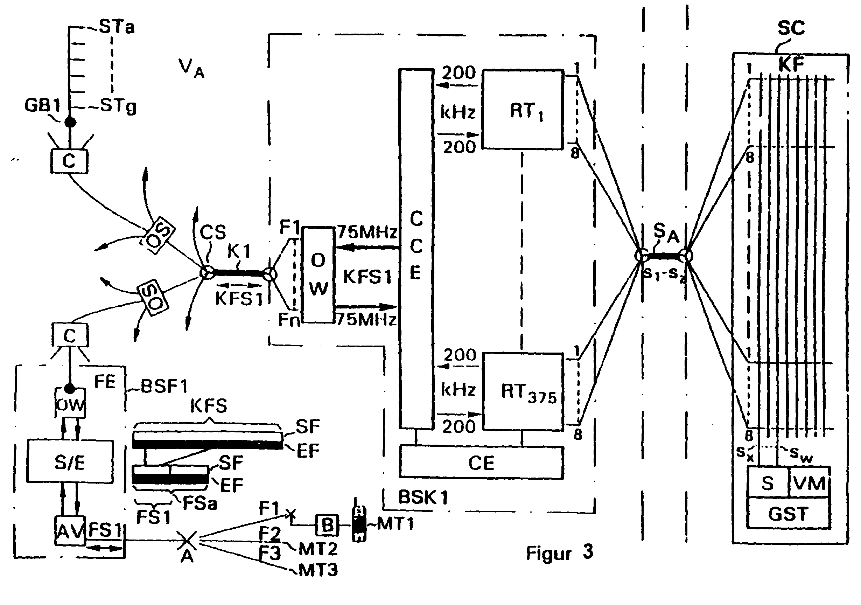

Aus der DE-PS 4143266 C1 ist eine weitere Schaltungsanordnung bekannt, in der ebenfalls für die mobilen und stationären Teilnehmerendgeräte gleiche Signalisierungs- und Kommunikationskanalzuordnungsprozeduren realisiert sind und wobei die Nutzinformationsübertragung netzweit im selben Format erfolgt. In dieser Schaltungsanordnung sind Funkbasisstationen und stationäre Teilnehmer an dasselbe Breitbandkabel angeschlossen. Sämtliche von einer Vermittlungsstelle zur Verfügung gestellte Kommunikationskanalpaare werden in gleichberechtigter Austauschbarkeit sämtlichen Teilnehmern des gemeinsamen Netzes zur Verfügung gestellt. Dabei ist eine Übertragungseinrichtung (BSK1) über ein Kabel (SA) mit digitalen Informationskanalpaaren (S1-Sz) mit der Vermittlungsstelle verbunden. In dieser Übertragungseinrichtung (BSK1) wird mittels sogenannter Radio Terminator-Einrichtungen (RT₁ - RT₃₇₅) ein Frequenzspektrum generiert, das über ein Breitbandkabel (K1) sowohl an die mobilen als auch an die stationären Teilnehmerendgeräte übertragen wird (siehe Figur 3 der vorliegenden Patentanmeldung und die zugehörige Beschreibung).

Die aus den beiden vorgenannten deutschen Patenten DE 4008790 C2 und DE 4143266 C1 vorbekannten Schaltungsanordnungen weisen als wesentliche Komponente ein Breitbandkabel auf. Dieses Breitbandkabel verläuft jeweils bis in das Haus, in dem ein anzuschließendes stationäres Teilnehmerendgerät vorhanden ist, oder mindestens bis zu einem Straßenverteiler (C), der mit stationären Endgeräten verbunden ist. Der von beiden vorbekannten Schaltungsanordnungen abdeckbare Anschlußbereich ist damit durch die Lage des jeweiligen Breitbandkabels definiert. Eine Ausdehnung des Anschlußbereichs ist nur durch eine entsprechende Verlängerung des Breitbandkabels möglich.

Die Verlegung von Breitbandkabeln ist jedoch relativ kostenaufwendig. Dies gilt insbesondere auch in Gebieten relativer geringer Anschlußdichte. Weitere Probleme des Standes der Technik sind bekannt aus EP 661 895 A1, Groß, W. er al.: Das Zeichengabesystem-Nr.-7-Netz der Deutschen Telekom, In: ntz, Heft 11/1996, S. 24 - 26; Schütt, Jörn: ein Schritt näher am 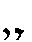 Personal Communicator 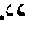 , In: telecom report 18(1995), Heft 6, S. 308 - 309 und aus DE 195 11 399 A1.

Ausgehend von diesem Stand der Technik liegt der Erfindung die Aufgabe zugrunde, eine Schaltungsanordnung und ein Verfahren der eingangs genannten Art anzugeben wobei die Schaltungsanordnung und das Verfahren ermöglichen, flächendeckend Fernmeldeverbindungen in einem für stationäre und mobile Teilnehmerendgeräte gemeinsamen Netz herzustellen, in dem stationäre Teilnehmerendgeräte nicht über ein Breitbandkabel mit einer Vermittlungsstelle verbunden sind.

Diese Aufgabe wird erfindungsgemäß mit einer Schaltungsanordnung, die in Anspruch 1 definiert ist, und mit einem Verfahren gelost, das in Anspruch 13 definiert ist.

Die Erfindung ist mit einer Mehrzahl von Vorteilen verbunden.

Erfindungsgemäß wird ein Fernmeldewählnetz geschaffen, das für mobile und stationäre Teilnehmerendgeräte einheitlich ist und dessen Anschlußbereich für stationäre Teilnehmerendgeräte ohne ein zu den Teilnehmerendgeräten führendes Breitbandkabel realisiert wird.
Die erfindungsgemäße Schaltungsanordnung weist also kein Breitbandkabel auf. Es ist also kein Breitbandkabel zu verlegen. Damit werden die Kosten für die Verlegung sowie die Kosten des Breitbandkabels selbst eingespart. Die erfindungsgemäße Schaltungsanordnung ermöglicht es vielmehr, stationäre Teilnehmerendgeräte an herkömmliche Teilnehmer- bzw. Fernmeldeleitungen (FK1) anzuschließen. Damit werden vorhandene Netzstrukturen in die erfindungsgemäße Netzstruktur einbezogen. Durch diese Einbeziehung vorhandener Komponenten bereits vorhandener Netze läßt sich die erfindungsgemäße Schaltungsanordnung relativ kostengünstig in die Praxis umsetzen.

Die erfindungsgemäße Schaltungsanordnung ermöglicht es, stationäre und mobile Teilnehmerendgeräte baugleich mindestens hinsichtlich der Einrichtungen zur Verarbeitung von Signalisierungsinformationen auszugestalten. Damit bietet die erfindungsgemäße Schaltungsanordnung Teilnehmern den Vorteil, daß sie ihre Teilnehmerendgeräte im Bereich des Fernmeldewählnetzes an jeden beliebigen Ort mitnehmen können, d.h. sie können ihr Endgerät als stationäres oder als mobiles Telefon verwenden. Die Teilnehmer besitzen nur noch eine einzige individuelle Kennung bzw. eine einzige Rufnummer, mit der sie im Telefonbuch verzeichnet sind. Damit werden durch das Fernmeldewählnetz alle möglichen Arten von Telefonanschlüssen erfaßt, also die persönlichen Telefone im Hause, die mobilen Telefone in Kraftfahrzeugen und kommerzielle Telefone. Für die Teilnehmer im Bereich der erfindungsgemäßen Schaltungsanordnung bedeutet dies, daß sie nur mit einer Grundgebühr für ein Telefon die Vorteile sowohl des stationären Netzes als auch die Vorteile des mobilen Netzes in Anspruch nehmen können.

Ein weiterer Vorteil der erfindungsgemäßen Schaltungsanordnung besteht darin, daß vorhandene Einrichtungen, insbesondere stationäre und mobile Teilnehmerendgeräte verwendet werden können, ohne daß eine Hardware- und/oder Software-Modifizierung der vorhandenen Endgeräte erforderlich ist.

Die kostengünstige Realisierung der erfindungsgemäßen Schaltungsanordnung wird weiterhin dadurch erzielt, daß auch weitere Einrichtungen verwendet werden können, die auf dem Markt erhältlich sind und daß diese Einrichtungen weder in ihrem Hardware- noch in ihrem Softwareaufbau zu modifizieren sind. Ein Beispiel hierfür ist die Signalumsetzeinrichtung, die insbesondere aus mindestens einem sogenannten Radio-Terminator gebildet wird. Derartige Radio-Terminator-Einrichtungen werden beispielsweise in "Base Transceiver Stations (BTS)" in einem Mobilfunknetz verwendet. Ein weiteres Beispiel hierfür ist die ("erste") Vermittlungsstelle, die durch eine Mobilfunkvermittlungsstelle gebildet wird. Die Vermittlungsstelle stellt sämtlichen stationären und mobilen Teilnehmerendgeräten in gleichberechtigter Austauschbarkeit Kommunikationskanäle zur Verfügung, so daß auch der Vorteil erzielt wird, daß gegenüber getrennten Netzen mit nur stationären und nur mobilen Teilnehmerendgeräten Verkehrsbelastungsspitzen im gemeinsamen Zugangsnetz ausgeglichen werden.

Weitere vorteilhafte Ausführungsformen der erfindungsgemäßen Schaltungsanordnung sind in den Unteransprüchen gekennzeichnet.

Die Erfindung wird nun anhand der Zeichnung beschrieben.

Es zeigt:
- Fig. 1: ein Fernmeldewählnetz mit einer erfindungsgemäßen Schaltungsanordnung;
- Fig. 2: ein Blockschaltbild einer erfindungsgemäßen Schaltungsanordnung; und
- Fig. 3: ein Blockschaltbild einer Schaltungsanordnung nach dem Stand der Technik.

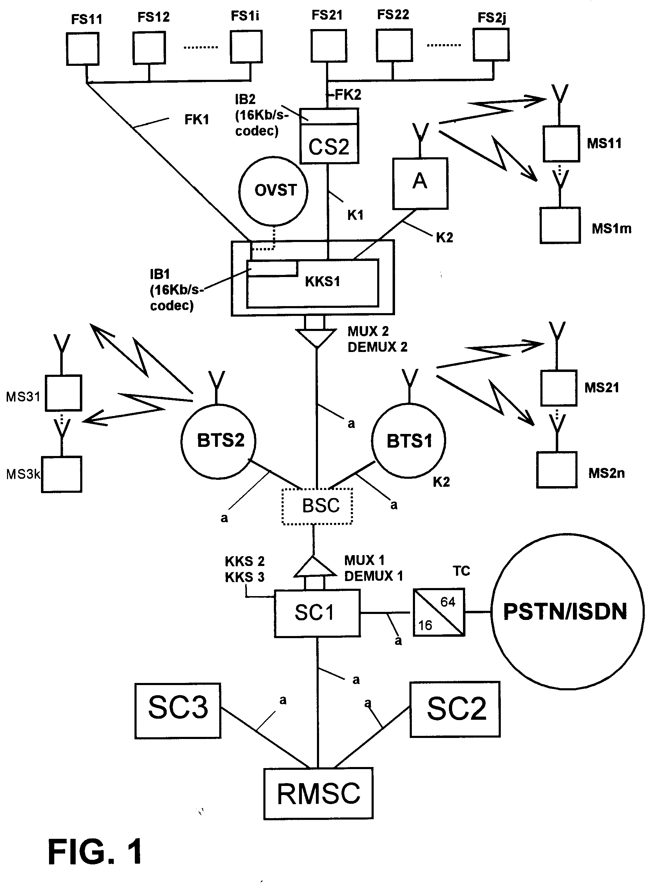

In Fig. 1 ist ein Fernmeldewählnetz mit mehreren ersten Vermittlungsstellen SC1, SC2, SC3, sowie einer regionalen Vermittlungsstelle RSC, über die mehrere erste Vermittlungsstellen verbindbar sind, dargestellt. Diese ersten Vermittlungsstellen SC1, SC2, SC3 sind über jeweils einen Übertragungsweg bzw. ein Bündel von Verbindungsleitungen a mit einer regionalen Vermittlungsstelle RMSC verbunden. Eine der ersten Vermittlungsstellen, nämlich die Vermittlungsstelle SC1, ist mit einer an sich aus Mobilfunknetzen bekannten "Base Station Controler (BSC)-Einrichtung", (gestrichelt gezeichnet) verbunden, die ihrerseits jeweils mit einem Bündel von Verbindungsleitungen a mit an sich bekannten Base Transceiver Station-Einrichtungen (Mobilfunk-Sende-/Empfangseinrichtungen) BTS1, BTS2 verbunden ist. Den Einrichtungen BTS1 und BTS2 sind die mobilen Teilnehmerendgeräte MS21, ..., MS2n und MS31, ..., MS2k zugeordnet.

Die Funktionen der Einrichtung BSC lassen sich daher auch in einer Kabelkopfstation bzw. Übertragungseinrichtung KKS1 integrieren, wobei dann das Bündel der Verbindungsleitungen a direkt von der ersten Vermittlungsstelle SC1 zu der Kabelkopfstation KKS1 verläuft.

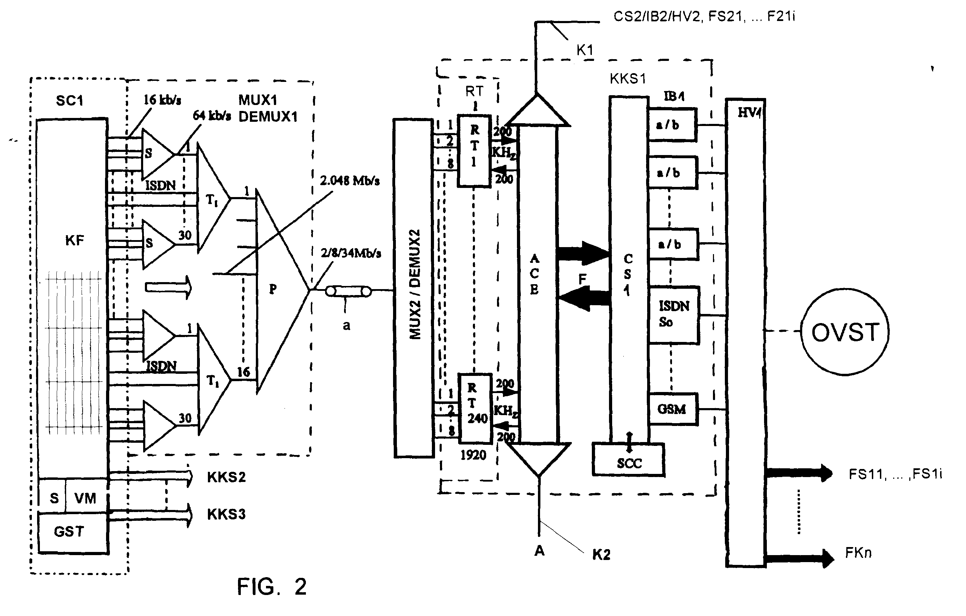

Andernfalls führt ein weiteres Bündel von Verbindungsleitungen a von der Base Station Controler-Einrichtung BSC zu der ersten Übertragungseinrichtung KKS1 (Kabelkopfstation), deren schaltungstechnischer Aufbau anhand von Figur 2 weiter erläutert wird.

Die erste Übertragungseinrichtung KKS1 ist in der Regel räumlich dem jeweiligen Fernmeldekabel-Endverteiler MDF eines Teilnehmereinzugsbereiches zugeordnet. Die Übertragungseinrichtung KKS1 kann aber auch im Falle von größeren Nebenstellenanlagen direkt beim Teilnehmer installiert werden.

Die erste Vermittlungsstelle SC1 kann auch mit weiteren Übertragungseinrichtungen KKS2, KKS3 verbunden sein, die wie die Übertragungseinrichtung KKS1 schaltungstechnish aufgebaut sind.

Die Übertragungseinrichtung KKS1 ist in dem in Fig. 1 dargestellten Ausführungsbeispiel über Übertragungsleitungen K1 und K2, die insbesondere jeweils durch ein Breitbandkabel gebildet sind, jeweils an eine Sende-/Empfangseinrichtung A einer Mobilfunkzelle und/oder an mindestens eine (übertragungseinrichtungsexterne, "zweite'') Anordnung bestehend aus Kanalauswahleinrichtung CS2, Umwandlungsschaltung IB2, z.B. HV2, stationäre Teilnehmerendgeräte FS21, ..., FS2j angeschlossen. Diese Anordnung entspricht damit im wesentlichen der Übertragungseinrichtung KKS1 sowie in Figur 2 dargestellt, allerdings ohne die Einrichtungen RT und ACE.

Über die Sende-/Empfangseinrichtung A werden mobile Endgeräte MS11, ..., MS1m in das Netz eingebunden. Die Kanalauswahleinrichtung CS2 (sowie auch die in Figur 2 dargestellte Kanalauswahleinrichtung CS1, die in KKS1 integriert ist) wählt für aufzubauende Fernmeldeverbindungen in Abhängigkeit von Signalisierungsinformationen, die von der ersten Vermittlungsstelle SC1 gebildet werden bzw. von dieser übertragen werden, aus einem von einer in Figur 2 dargestellten Signalumsetzeinrichtung RT generierten Frequenzspektrum ein freies Kommunikationskanalpaar aus und ordnet das ausgewählte Kommunikationskanalpaar den an der herzustellenden Fernmeldeverbindung beteiligten Endgeräten zu, wobei mindestens eines dieser Endgeräte ein stationäres Teilnehmerendgerät FS21, ..., FS2j im Anschlußbereich der Kanalauswahleinrichtung CS2 ist.

Die Übertragungseinrichtung KKS1 weist weiterhin ein 16 kb/s-Codec auf, an das z. B. über bereits vorhandene Fernmeldekabel FK1, FK2, FK2 stationäre Teilnehmerendgeräte FS11, ..., FS1i anschließbar sind.

Diese stationären Teilnehmerendgeräte FS11, ..., FS1i waren vor der Implementierung der erfindungsgemäßen Schaltungsanordnung über die bereits vorhandenen Fernmeldekabel FK1, FK2, ..., FKn mit einer Ortsvermittlungsstelle OVSt verbunden. Die in Figur 1 gestrichelt dargestellte Linie zwischen der Ortsvermittlungsstelle OVSt und KKS1 bzw. FK1 zeigt, daß die Verbindungsleitung zwischen OVSt und FK1 bei der Implementierung der erfindungsgemäßen Schaltungsanordnung getrennt werden.

Bei dem in Figur 1 dargestellten Ausführungsbeispiel haben die stationären Teilnehmerendgeräte FS11, ..., FS1i (über FK1, KKS1), die stationären Teilnehmerendgeräte FS21, ..., FS2j (über FK2, CS2, K1, KKS1) in funktionell gleicher Weise Zugang zu der ersten Vermittlungsstelle SC1 wie die mobilen Endgeräte MS11, ..., MS1m (über A, K2, KKS1), MS21, ..., MS2n (über BTS1, BSC) und MS31, ..., MS3kn (über BTS2, BSC). Die stationären und die mobilen Teilnehmerendgeräte haben baugleiche Einrichtungen zur Verarbeitung von Signalisierungsinformationen.

Die Bündel von Verbindungsleitungen a sind insbesondere Digitalsignalleitungen (PCM Links), über die insbesondere 8 kb/s- oder 16 kb/s-Kommunikationskanalpaare übertragen werden. Die Bündel von Verbindungsleitungen a zwischen Vermittlungsstelle SC1 und Einrichtung BSC einerseits und Einrichtung BSC und Übertragungseinrichtung KKS1 andererseits sind bei dem in Figur 1 dargestellten Ausführungsbeispiel in der Weise ausgestaltet, daß zur Übertragung von Informationen von der ersten Vermittlungsstelle SC1 zu der Übertragungseinrichtung KKS1 über das erstgenannte Bündel von Verbindungsleitungen a (zwischen SC1 und BSC) diese vermittlungsstellenseitig erste Multiplexeinrichtungen MUX1 (in Figur 2: MUX1; S, T1, P) sowie erste Demultiplexeinrichtungen DEMUX1 aufweisen. An dem Bündel von Verbindungsleitungen a zwischen BSC und Übertragungseinrichtung KKS1 sind übertragungseinrichtungsseitig korrespondierende zweite Multiplexeinrichtungen MUX2 und zweite Demultiplexeinrichtungen DEMUX2 angeordnet.

Die vorerwähnten Einrichtungen BSC und BTS1, BTS2 sind in die Übertragungseinrichtung KKS1 integrierbar.

Weiterhin sind auch die Kanalauswahleinrichtung CS2 sowie die Sende/ Empfängseinrichtung A in die Übertragungseinrichtung KKS1 integrierbar.

An die erste Vermittlungsstelle SC1 ist eine Schnittstelleneinrichtung TC (Transcoding) ankoppelbar, die den Anschluß von Übertragungsleitungen bzw. eines Übertragungsleitungsbündel an ein weiteres Fernmeldewählnetz PSTN/ISDN ermöglicht, in dein eine andere Kommunikationskanalpaarstruktur implementiert ist. Ebenso ist die erste Vermittlungsstelle SC1 an ein Datennetz koppelbar, über welches bekannte Datendienste durchgeführt werden können.

Eine solche Schnittstelleneinrichtung TC ermöglicht es, das Fernmeldewählnetz, in dem die erfindungsgemäße Schaltungsanordnung implementiert ist, mit einem weiteren Fernmeldewählnetz zu verbinden, in dem eine andere Kommunikationskanalpaarstruktur bzw. eine andere Übertragungsrate als 16 kb/s implementiert ist. In dem in Fig. 1 dargestellten Beispiel realisiert die Einrichtung TC eine 16-/64 kb/s bzw. eine 64-/16 kb/s-Wandelung.

Die erste Vermittlungsstelle SC1 und die Übertragungseinrichtung KKS1 sind erfindungsgemäß in der Weise ausgestaltet, daß zwischen erster Vermittlungsstelle und weiteren Vermittlungsstellen Nutz- und Signalisierungsinformationen mit derjenigen Übertragungsrate übertragen werden, mit der sie in dem Bereich zwischen Übertragungseinrichtung KKS1 und erster Vermittlungsstelle SC1 übertragen werden. Der Vorteil besteht insbesondere darin, daß durchgängig im gesamten Netz z.B. für die Sprachkommunikation mit einer sehr geringen Bitrate z.B. 16 kb/s, gearbeitet werden kann, wodurch die vorhandene Übertragungskapazität des Netzes gegenüber dem Stand der Technik äußerst effizient genutzt wird.

Die erwähnten ersten Vermittlungsstellen SC1, SC2, SC3 sind insbesondere Mobilfunk-Vermittlungsstellen, die in der Weise ausgestaltet sind, daß den mobilen Teilnehmerendgeräten MS11,..., MS1m, MS21, ..., MS2n; MS31, ..., MS3k und/oder den stationären Teilnehmerendgeräten FS11, ... FS1i; FS21, ..., FS2j in funktionell gleicher Weise Zugang ermöglicht wird. Insbesondere sind die ersten Vermittlungsstellen wie Vermittlungsstellen eines bekannten mobilen Kommunikationssystems ausgestaltet. Eine solche Vermittlungsstelle ist auch aus dem deutschen Patent DE 41 43 266 C1 bekannt und wird noch anhand von Figur 3 beschrieben.

Fig. 2 zeigt eine Ausführungsform der Übertragungseinrichtung KKS1. Dieser Übertragungseinrichtung KKS1 ist die zweite Multiplexer-Einrichtung MUX2 und die zweite Demultiplexer-Einrichtung DEMUX2 vorgeschaltet.

Zur Übertragung von Informationen von der ersten Vermittlungsstelle SC1 zu der Übertragungseinrichtung KKS1 über einen Übertragungsweg bzw. eine Verbindungsleitung a weist der in Figur 2 dargestellte Übertragungsweg vermittlungsstellenseitig erste Multiplex-Einrichtungen MUX1, S, T1, P und übertragungseinrichtungsseitig die korrespondierende zweite Demultiplex-Einrichtungen DEMUX2 auf. Der Übertragungsweg a weist zwischen der ersten Vermittlungsstelle SC1 und der Übertragungseinrichtung KKS1 zur Übertragung von Informationen von der Übertragungsseinrichtung KKS1 zu der ersten Vermittlungsstelle SC1 übertragungseinrichtungsseitig zweite Multiplex-Einrichtungen MUX2 und vermittlungsstellenseitig korrespondierende erste Demultiplex-Einrichtungen DEMUX1 auf.

Die dargestellte Struktur ermöglicht es, Nutz- und/oder Signalisierungsinformationen in Summen-Übertragungsraten von z. B. 2/8/34 Mb/s zwischen erster Vermittlungsstelle SC1 und Übertragungseinrichtung KKS1 (gegebenenfalls über die Einrichtung BSC, in Figur 1) bzw. in umgekehrter Richtung zu übertragen.

Die erste Vermittlungsstelle SC1 kann mit weiteren Übertragungseinrichtungen KKS2 und KKS3 verbunden sein, die wie die Übertragungseinrichtung KKS1 aufgebaut sein können. Die erste Vermittlungsstelle SC1 weist ein Koppelfeld KF und eine gemeinsame Steuerung GST auf, gegebenenfalls auch eine (aus dem Patent DE 41 43 266 C1 bekannte) Steuerung S und eine Verkehrsmeßeinrichtung auf.

Die zweite Multiplex-Einrichtung MUX2 bzw. die zweite Demultiplex-Einrichtung DEMUX2 ist mit einer Signalumsetzeinrichtung RT verbunden, die insbesondere modulartig aufgebaut ist und aus einer Mehrzahl an sich bekannter Radio-Terminator-Einrichtungen RT1, ...., RT240 besteht. Die Radio-Terminator-Einrichtungen setzen jeweils 8 von der ersten Vermittlungsstelle SC1 bereitgestellten Kommunikationskanalpaare mobilfunkkompatibel in Signale in vorgebbaren Frequenzlagen um, insbesondere in TDMA/FDMA-Signale (Frequency Division Multiple Access/Time Division Multiple Access gemäß GSM-Standard) und damit in Signale mit Frequenzspektren von 2x200 kHz. Die generierten Signale werden einer Signal-Koppel-Einrichtung ACE zugeführt, die die von der Signalumsetzeinrichtung RT umgesetzten Signale frequenzmäßig nebeneinander in ein gemeinsames Frequenzspektrum F umsetzt, das sowohl mobilen Teilnehmern also auch stationären Teilnehmern zugänglich ist.

Die Signal-Koppel-Einrichtung ACE ist über eine Hochfrequenzkopplung mit der Kanalauswahleinrichtung CS1 verbindbar, so daß dieser Einrichtung CS1 das gemeinsame Funkfrequenzspektrum F zugänglich ist.

Diese Signal-Koppel-Einrichtung ACE ist in dem dargestellten Ausführungsbeispiel weiterhin über Verbindungsleitungen K1, K2 mit einer oben bereits beschriebenen Anordnung, die die Kanalauswahlschaltung CS2 und die Schaltung IB2 aufweist, und mit einer Sende-/Empfangseinrichtung A einer Mobilfunkzelle verbindbar.

Die erste Vermittlungsstelle SC1 stellt im Falle eines Verbindungswunsches für die Herstellung einer Verbindung von einem Teilnehmerendgerät (z.B. FS11, FS21 oder MS11 (Fig. 1)) zu der ersten Vermittlungsstelle SC1 bzw. umgekehrt dem Teilnehmerendgerät basierend auf einem individuellen Kennungssignal des Teilnehmerendgeräts oder basierend auf einer Anschlußlageninformation (Adresse eines Umwandlungsschaltungsmoduls z.B. ein Modul IB1 a/b) ein Kommunikationskanalpaar bereit. Eine Steuerung SCC (Signalling Channel Control) der Kanalauswahleinrichtung CS1 wählt in Abhängigkeit von Signalisierungsinformationen der ersten Vermittlungsstelle SC1 aus dem von der Signalumsetzeinrichtung RT und dem von der Signalkoppeleinrichtung ACE generierten Frequenzspektrum F ein freies Kommunikationskanalpaar aus.

Die genannten Frequenzspektren weisen auch Signalisierungskanäle auf, etwa in der Größenordnung von 5 % des Gesamtfrequenzspektrums F. Über die Signalisierungskanäle werden zwischen der ersten Vermittlungsstelle SC1 und der Übertragungseinrichtung KKS1 die Kanalzuordnung über die Steuerung SCC in der Kanalauswahleinrichtung CS1 gesteuert.

Die erste Vermittlungsstelle SC1 und die Übertragungseinrichtung KKS1 sind insgesamt in der Weise ausgestaltet, daß netzweit für die stationären und mobilen Teilnehmerendgeräte gleiche Signalisierungs- und Kommunikationskanalzuordnungsprozeduren realisiert werden, wobei die Nutzinformationsübertragung netzweit im gleichen Format erfolgt.

Die Übertragungseinrichtung KKS1 weist mindestens eine Umwandlungseinrichtung IB auf, die die Nutzinformationen, die im Rahmen einer Fernmeldeverbindung in einem ausgewählten Kommunikationskanalpaar übertragen werden, mobilfunk- bzw. mobilfunkstandardkompatibel umwandelt. Insbesondere besteht die Umwandlungseinrichtung IB1 aus Umwandlungsschaltungsmodulen IB1 a/b (für ein stationäres Analog-Teilnehmerendgerät), IB1 So (für ein stationäres Digital-Teilnehmerendgerät), IB1 GSM für den direkten Anschluß von mobilen Teilnehmerendgeräten über Teilnehmeranschlußleitungen, die insbesondere als steckbare Baugruppen und steckerkompatibel ausgestaltet sind.

Die Umwandlungseinrichtung IB1 bzw. die Umwandlungsschaltungsmodule IB1 a/b, IB1 So sind z.B. über einen Hauptverteiler HV1 und über das Fernmeldekabel FK1 mit den stationären Teilnehmerendgeräten FS11, ..., FS1i verbunden. Dagegen ist die Verbindung zwischen diesen stationären Teilnehmerendgeräten FS11, ..., FS1i und der Ortsvermittlungsstelle OVSt, mit der sie früher verbunden waren, rangiermäßig getrennt.

Die Erfindung betrifft auch ein Verfahren zur Herstellung von Fernmeldeverbindungen in einem vorstehend beschriebenen Fernmeldewählnetz, vorzugsweise in einem Fernsprechwählnetz. Die erste Vermittlungsstelle SC1 ordnet einem meldenden Teilnehmer, unabhängig davon, ob es ein mobiler oder ein stationärer Teilnehmer ist, ein Kommunikationskanalpaar zu, das als Frequenzband entweder von einer Einrichtung BSC, BST1, BTS2, A als Funksignal ausgestrahlt wird oder über die Übertragungseinrichtungen KKS1, KKS2 auf die Fernmeldekabel FK1, FK2, FKn übertragen wird. Da wie bei an sich bekannten mobilen Kommunikationssystemen jeder gesprächsbereite Teilnehmer in der Vermittlungsstelle SC1 mit seiner Kennung und seiner lokalen Lage festgehalten ist, kann die Vermittlungsstelle SC1 den jeweils gewünschten Teilnehmer in bekannter Weise ermitteln und über das Koppelfeld KF die Kommunikationskanalpaare dem rufenden und gerufenen Teilnehmer zur Verfügung stellen, sofern die Verbindung im Bereich der Vermittlungsstelle SC1 verbleibt. Andernfalls erfolgt eine Durchschaltung eines Kommunikationskanalpaares zu einer anderen Vermittlungsstelle, die gegebenenfalls in einem anderen Netz angeordnet ist.

Die erste Vermittlungsstelle SC1 stellt also im Falle eines Verbindungswunsches für die Herstellung einer Verbindung von einem Teilnehmerendgerät zu der ersten Vermittlungsstelle SC1 bzw. umgekehrt dem Teilnehmerendgerät basierend auf einem individuellen Kennungssignal des Teilnehmerendgeräts oder basierend auf einer Anschlußlageninformation ein Kommunikationskanalpaar bereit. Die Kommunikationskanalpaare, die von der ersten Vermittlungsstelle SC1 bereitgestellt worden sind, werden in Signale in vorgebbaren Frequenzlagen umgesetzt und die umgesetzten Signale werden frequenzmäßig nebeneinander in ein gemeinsames Frequenzspektrum F umgesetzt.

Die Nutzinformationen stationärer Teilnehmerendgeräte, welche die im Rahmen einer Fernmeldeverbindung in einem ausgewählten Kommunikationskanalpaar übertragen werden, werden mobilfunkstandardkompatibel umgewandelt. Dies erfolgt durch eine Umwandlungseinrichtung, die vorzugsweise in die Übertragungseinrichtung integriert ist und zwischen den stationären Teilnehmerendgeräten und der ersten Vermittlungsstelle angeordnet ist.

Fig. 3 zeigt eine aus dem deutschen Patent DE 41 43 266 bekannten Schaltungsanordnung. In dieser bekannten Schaltungsanordnung ist eine Übertragungseinrichtung BSK1 mit Funkbasisstationen (z.B. BSF1) und mit stationären Teilnehmerendgeräten STa-STg bzw. einem Gebäudebooster GB1, der den stationären Teilnehmerendgeräten vorgeschaltet ist, über ein Breitbandkabel K1 verbunden.

Ein Funkbasisstation-Endgerät FE verfügt über einen opto-elektronischen Wandler W, der das gesamte Kabelfrequenzspektrum KFS1 am Eingang einer Sende-/Empfangseinrichtung S/E, bestehend aus 3000 Sendefunkkanälen SF und 3000 Empfangsfunkkanälen EF, bereitstellt.

Gemeinsame Signalisierungskanäle S_{X}-S_{W} liegen grundsätzlich in einer festen Frequenzlage und sind deshalb der Sende-/Empfangseinrichtung S/E zugänglich, so daß zwischen einer Steuereinrichtung S und einer gemeinsamen Steuerung GST der Vermittlungsstelle SC einerseits und der Sende-/Empfangseinrichtung S/E der Funkbasisstation-Endgeräte FE andererseits Steuerinformationen ausgetauscht werden können.

Mit diesen Steuerinformationen steuert die Vermittlungsstelle SC die Lage und Größe der Funkfrequenzbereiche FS1-FSn innerhalb des Funkfrequenzspektrums FSa eines Funkversorgungslayers FLa und die Zuordnung der Funkkanäle des Kabelfrequenzspektrums KFS1 in den Funkfrequenzbereich, z.B. FS1.

Der auf diese Weise generierte Funkfrequenzbereich, z. B. FS1, wird am Ausgang der Sende-/Empfangseinrichtung E/S in das Frequenzband, z.B. 900 MHz transformiert, wobei die Sendfunkkanäle SF z.B. im unteren Seitenband und die Empfangsfunkkanäle EF im oberen Seitenband liegen. Über einen Antennenverstärker AV werden die Funkkanalpaare innerhalb des Funkfrequenzbereiches ausgesendet und empfangen. Jeder mobile Teilnehmer MT1-MT3 hat also zu allen Kommunikationskanalpaaren, wenn auch zeitlich zu jeweils nur einer begrenzten Anzahl über die Funkwege F1, F2, F3 Zugang. Auch im Funkfrequenzbereich, z.B. FS1, sind gemeinsame Signalisierungskanalpaare enthalten, über die die Gemeinsame Steuerung GST der Vermittlungsstelle SC im Falle einer Verbindung in den Endgeräten der Teilnehmer MT1-MT3 vorhandene schaltbare Kanalfilter einstellt und auf diese Weise letztendlich die individuelle Zuordnung eines Kommunikationskanalpaars vom Teilnehmer MT1-MT3 über die im Funkfrequenzbereich FS1 verlaufende Funkkanalpaare, die Umsetzung in der Sende-/Empfangseinrichtung S/E in das Kabelfrequenzspektrum KFS1 und über eines der hier verlaufenden Funkkanalpaare des Breitbandkabels K1 und die Umsetzungseinrichtungen RT₁-RT₃₇₅ des Übertragungsorgans BSK1, die Digitalsignalleitungen SA bis zu einem bestimmten Anschlußpunkt des Koppelfeldes KF der Vermittlungsstelle SC durchschaltet.

Die stationären Teilnehmer STa-STg haben in funktionell gleicher Weise Zugang zur Vermittlungsstelle SC wie mobile Teilnehmer, wobei allerdings ein Gebäudebooster GB1 das gesamte Kabelfrequenzspektrum KFS1 ohne Begrenzung der Funkkanalpaare den Teilnehmern STa-STg zugänglich macht.

Eine Kontrolleirrichtung CE versorgt die Einrichtungen RT und CCE mit den für die Modulation/Demodulation notwendigen Taktfrequenzen.

Diese Schaltungsanordnung nach dem Stand der Technik enthält also als wesentliche Komponente ein Breitbandkabel bis zu den einzelnen stationären Teilnehmern, während erfindungsgemäß kein kein solches Breitbandkabel, das zu stationären Endgeräten führt, nicht erforderlich ist. Gleichwohl ist aber die erfindungsgemäße Übertragungseinrichtung KKS1 ebenfalls an ein Breitbandkabel anschließbar, das insbesondere der Verbindung mit Anordnungen aus Kanalauswahlreinrichtungen und Umwandlungsschaltung dient. Erfindungsgemäß lassen sich bereits vorhandene stationäre Teilnehmerendgeräte über bereits vorhandene Fernmeldeanschlußleitungen und Fernmeldekabel in das gemeiusame Netz (Fixed Mobile Comunication Network) einbinden.

## Patentansprüche

1. Schaltungsanordnung für Fernmeldewählnetze, vorzugsweise Fernsprechwählnetze, mit mindestens einer ersten Vermittlungsstelle (SC1), mit einer Übertragungseinrichtung (KKS1), mit mobilen Teilnehmerendgeräten (MS11, ..., MS1m; MS21, ... MS2n; MS31... MS3k) und/oder stationären Teilnehmerendgeräten (FS11, ..., FS1i; FS21, ... FS2j), wobei die mobilen Teilnehmerendgeräte und/oder die stationären Teilnehmerendgeräte in funktionell gleicher Weise Zugang zu der ersten Vermittlungsstelle (SC1) haben.
wobei die erste Vermittlungsstelle im Falle eines Verbindungswunsches für die Herstellung einer Verbindung von einem Teilnellmerendgerät zu der ersten Vermittlungsstelle (SC1) bzw. umgekehrt dem Teilnehmerendgerät basierend auf einem individuellen Kennungssignal des Teilnehmerendgeräts oder basierend auf einer Anschlußlageinformation ein Kommunikationskanalpaar bereitstellt.
wobei die Übertragungseinrichtung (KKS1) eine Signalumsetzeinrichtung (RT) aufweist, die Kommunikationskanalpaare, die von der ersten Vermittlungsstelle (SC1) bereitgestellt worden sind, in Signale in vorgebbaren Frequenzlagen umsetzt.
wobei die Übertragungseinrichtung (KKS1) eine Signalkoppeleinrichtung (ACE) aufweist, die die von der Signalumsetzeinrichtung (RT) umgesetzten Signale frequenzmäßig nebeneinander in ein gemeinsames Frequenzspektrum (F) umsetzt, das sowohl mobilen Teilnehmern als auch stationären Teilnehmern zugänglich ist,
wobei die Übertragungseinrichtung (KKS1) eine Kanalauswahleinrichtung (CS1) aufweist, die in Abhängigkeit von Signalisierungsinformationen der ersten Vermittlungsstelle (SC1) aus dem von der Signalumsetzeinrichtung (RT) und der Signalkoppeleinrichtung (ACE) generierten Frequenzspektrum (F) ein freies Kommunikationskanalpaar auswählt,
wobei sowohl die erste Vermittlungsstelle (SC1) als auch die Übertragungseinrichtung (KKS1) in der Weise ausgestaltet ist, daß netzweit für die stationären und mobilen Teilnehmerendgeräte (MS11, ...MS1m; MS21, ... MS2n; MS31... MS3k; FS11, ..., FS1i; FS21, ... FS2j) gleiche Signalisierungs- und Kommunikationskanalzuordnungsprozeduren realisiert werden und wobei die Nutzinformationsübertragung netzweit im gleichen Format erfolgt,
**dadurch gekennzeichnet,**
daß die Übertragungseinrichtung (KKS1) mindestens eine Umwandlungsschaltung (IB1 a/b, IB1 So, IB1 GSM) aufweist, die Nutzinformationen stationärer Teilnehmerendgeräte, welche im Rahmen einer Fernmeldeverbindung in einem ausgewählten Kommunikationskanalpaar übertragen werden, mobilfunkstandardkompatibel umwandelt.

2. Schaltungsanordnung nach Anspruch 1, dadurch gekennzeichnet, daß die Umwandlungsschaltung (IB1 a/b, IB1 So) als steckbare Baugruppen und steckerkompatibel ausgestaltet ist.

3. Schaltungsanordnung nach einem der vorstehenden Ansprüche, dadurch gekennzeichnet, daß die erste Vermittlungsstelle (SC1) und Übertragungseinrichtung (KKS1) in der Weise ausgestaltet sind, daß auf dem Übertragungsweg (a) zwischen erster Vermittlungsstelle (SC1) und Übertragungseinrichtung (KKS1) Nutz- und/oder Signalisierunginformationen, die im Rahmen einer Fernmeldeverbindung zwischen einem sendenden stationären oder einem mobilen Teilnehmerendgerät einerseits und einem empfangenden stationären oder einem mobilen Teilnehmerendgerät andererseits mit 16 kb/s übertragen werden.

4. Schaltungsanordnung nach einem der vorstehenden Ansprüche, dadurch gekennzeichnet, daß die Signalumsetzeinrichtung (RT) Signalumsetzschaltungsmodule (RT1, ..., RT240) aufweist, und daß jedes Signalumsetzschaltungsmodul (RT1, ..., RT240) eine Gruppe von Kommunikationskanalpaaren einer vorgebbaren Anzahl von Kommunikationskanalpaaren umsetzt.

5. Schaltungsanordnung nach einem der vorstehenden Ansprüche, dadurch gekennzeichnet, daß die Signalkoppeleinrichtung (ACE) mit mindestens einer Sende-/Empfangseinrichtung (A) einer Mobilfunkzelle verbindbar ist, über die Nutz- und Signalisierungsinformationen von und zu mobilen Teilnehmerendgeräten (MS11, ..., MS1m) in Funkkanälen übertragen werden, die jeweils in unterschiedlichen Funkbändern liegen.

6. Schaltungsanordnung nach einem der vorstehenden Ansprüche, dadurch gekennzeichnet, daß die Signalkoppeleinrichtung (ACE) mit mindestens einer weiteren Kanalauswahlschaltung (CS2) verbindbar ist, die räumlich getrennt von der Übertragungseinrichtung (KKS1) angeordnet ist.

7. Schaltungsanordnung nach einem der vorstehenden Ansprüche, dadurch gekennzeichnet, daß zur Übertragung von Informationen von der ersten Vermittlungsstelle (SC1) zu der Übertragungseinrichtung (KKS1) über einen Übertragungsweg (a) dieser vermittlungsstellenseitig erste Multiplexeinrichtungen (MUX1; S, T1, P) und übertragungseinrichtungsseitig korrespondierende erste Demultiplexeinrichtungen (DEMUX1) aufweist, und daß der Übertragungsweg (a) zwischen erster Vermittlungsstelle (SC1) und Übertragungseinrichtung (KKS1) zur Übertragung von Informationen von der Übertragungseinrichtung zu der ersten Vermittlungsstelle übertragungseinrichtungsseitig zweite Multiplexeinrichtungen (MUX2) und vermittlungsstellenseitig korrespondierende zweite Demultiplexeinrichtungen (DEMUX2) aufweist.

8. Schaltungsanordnung nach einem der vorstehenden Ansprüche, dadurch gekennzeichnet, daß an die erste Vermittlungsstelle (SC1) eine Schnittstelleneinrichtung (TC) ankoppelbar ist, die den Anschluß von Übertragungsleitungen an ein weiteres Fernmeldewählnetz (PSTN/ISDN) ermöglicht, in dem eine andere Kommunikationskanalpaarstruktur implementiert ist.

9. Schaltungsanordnung nach einem der vorstehenden Ansprüche, dadurch gekennzeichnet, daß die erste Vermittlungsstelle (SC1) und die Übertragungseinrichtung (KKS1) in der Weise ausgestaltet sind, daß zwischen ersten Vermittlungsstellen und weiteren Vermittlungsstellen Nutz- und Signalisierungsinformationen mit derjenigen Übertragungsrate übertragen werden, mit der sie in dem Bereich zwischen Übertragungseinrichtung (KKS1) und erster Vermittlungsstelle (SC1) übertragen werden.

10. Schaltungsanordnung nach einem der vorstehenden Ansprüche, dadurch gekennzeichnet, daß die stationären und die mobilen Teilnehmerendgeräte baugleiche Einrichtungen zur Verarbeitung von Signalisierungsinformationen aufweisen.

11. Übertragungseinrichtung (KKS1) für eine Schaltungsanordnung nach einem der vorstehenden Ansprüche, dadurch gekennzeichnet, daß diese eine Signalkoppeleinrichtung (ACE) und eine Kanalauswahleinrichtung (CS1) aufweist.

12. Umwandlungsschaltung (IB1 a/b, IB1 So) für eine Übertragungseinrichtung (KKS1) nach Anspruch 12, dadurch gekennzeichnet, daß die Umwandlungsschaltung Nutzinformationen, die im Rahmen einer Fernmeldeverbindung in einem ausgewählten Kommunikationskanalpaar übertragen werden, mobilfunkstandardkompatibel umwandelt.

13. Verfahren zur Herstellung von Fernmeldeverbindungen in Fernmeldewählnetzen, vorzugsweise Fernsprechwählnetzen, mit mindestens einer ersten Vermittlungsstelle (SC1), mit einer Übertragungseinrichtung KKS1, mit mobilen Teilnehmerendgeräten (MS11, ...MS1m; MS21, ... MS2n; MS31... MS3k) und/oder stationären Teilnehmerendgeräten (FS11, ..., FS1i; FS21, ... FS2j), wobei die mobilen Teilnehmerendgeräte und/oder die stationären Teilnehmerendgeräte in funktionell gleicher Weise Zugang zu der ersten Vermittlungsstelle (SC1) haben,
wobei die erste Vermittlungsstelle im Falle eines Verbindungswunsches für die Herstellung einer Verbindung von einem Teilnehmerendgerät zu der ersten Vermittlungsstelle (SC1) bzw. umgekehrt dem Teilnehmerendgerät basierend auf einem individuellen Kennungssignal des Teilnehmerendgeräts oder basierend auf einer Anschlußlageninformation ein Kommunikationskanalpaar bereitstellt,
wobei Kommunikationskanalpaare, die von der ersten Vermittlungsstelle (SC1) bereitgestellt worden sind, in Signale in vorgebbaren Frequenzlagen umgesetzt werden,
wobei die umgesetzten Signale frequenzmäßig nebeneinander in ein gemeinsames Frequenzspektrum (F) umgesetzt werden, das sowohl mobilen Teilnehmern als auch stationären Teilnehmern zugänglich ist,
wobei in Abhängigkeit von Signalisierungsinformationen der ersten Vermittlungsstelle (SC1) aus dein generierten Frequenzspektrum (F) ein freies Kommunikationskanalpaar ausgewählt wird,
wobei netzweit für die stationären und mobilen Teilnehmerendgeräte (MS11, ...MS1m; MS21, ... MS2n; MS31... MS3k; FS11, ..., FS1i; FS21, ... FS2j) gleiche Signalisierungs- und Kommunikationskanalzuordnungsprozeduren realisiert werden und wobei die Nutzinformationsübertragung netzweit im gleichen Format erfolgt,
**dadurch gekennzeichnet,**
daß die Nutzinformationen stationärer Teilnehmerendgeräte, welche im Rahmen einer Fernmeldeverbindung in einem ausgewählten Kommunikationskanalpaar übertragen werden, mobilfunkstandardkompatibel umgewandelt werden.
